(19) 

Europäisches
Patentamt
European
Patent Office
Office européen
des brevets

(11) **EP 4 350 585 A1**

(12) **EUROPEAN PATENT APPLICATION**
published in accordance with Art. 153(4) EPC

<table>
<tr><td>(43) Date of publication:<br>**10.04.2024   Bulletin 2024/15**</td><td>(51) International Patent Classification (IPC):<br>***G06N 20/00*** (2019.01)</td></tr>
<tr><td>(21) Application number: **21944130.0**</td><td rowspan="2">(52) Cooperative Patent Classification (CPC):<br>**G06N 20/00**</td></tr>
<tr><td>(22) Date of filing: **02.06.2021**</td></tr>
<tr><td></td><td>(86) International application number:<br>**PCT/JP2021/021059**</td></tr>
<tr><td></td><td>(87) International publication number:<br>**WO 2022/254626 (08.12.2022 Gazette 2022/49)**</td></tr>
</table>

<table>
<tr><td>(84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br>Designated Validation States:<br>**KH MA MD TN**</td><td>(71) Applicant: **FUJITSU LIMITED**<br>**Kawasaki-shi, Kanagawa 211-8588 (JP)**<br><br>(72) Inventor: **SONODA, Ryosuke**<br>**Kawasaki-shi, Kanagawa 211-8588 (JP)**<br><br>(74) Representative: **Hoffmann Eitle**<br>**Patent- und Rechtsanwälte PartmbB**<br>**Arabellastraße 30**<br>**81925 München (DE)**</td></tr>
</table>

(54) **MACHINE LEARNING PROGRAM, MACHINE LEARNING METHOD, AND MACHINE LEARNING DEVICE**

(57)     A parameter is calculated based on a difference between a fairness value based on an attribute of a second rank and a fairness value based on an attribute of a first rank when first data of a first attribute and second data of a second attribute among the plurality of data are switched in the first rank, and training of the machine learning model is executed using a loss function including the parameter, thereby realizing optimization with a fairness constraint without causing overadaptation.

FIG. 1

**Description**

FIELD

The present invention relates to a machine learning method in which fairness is considered.

BACKGROUND

In recent years, rank learning has been known, in which a ranking arranged in descending order of likelihood of being a positive example is predicted using a machine learning model, from past binary data such as click on a web page, credit, acceptance of adoption, and the like.

Rank learning has been used for decision-making by many companies such as banks and SNS (Social Networking Service) companies.

However, there are cases in which attributes that must not be distinguished (protection attributes), such as gender and race, affect prediction results, which is problematic. Such a problem has been proposed in the classification problem before, but has also been proposed in the ranking problem in recent years.

For example, in the SNS, by performing machine learning using data in which the number of clicks of a male account is large, there is a case where it is predicted that the male account occupies the top of the search result ranking.

The main reason for this is that input data used in machine learning includes a differential bias. In the above example, the cause is data in which the number of positive male cases is overwhelmingly large or data in which the number of males is overwhelmingly large.

For ranking of prediction results, various criteria are introduced to evaluate the fairness of groups based on protection attributes (protection groups), and fair rank learning is expected to take into account potential social issues such as discrimination and to remove bias from the output.

As a method for correcting such unfairness of ranking output, an in-processing method is known in which fairness correction processing is performed by adding a fairness constraint to an AI (Artificial Intelligence)algorithm of rank learning. In such a method, as described in the following equation (1), a fairness constraint is added to the loss, and its approximate equation is optimized.

[Equation 1]

$$Loss = -\sum_{(y_i, y_j) \in D_{biased}} \left\{ P(\hat{y}_i > \hat{y}_j | y_i > y_j) + \lambda_{ij} \left( \left| A_{G_i > G_j} - A_{G_i > G_j} \right| - \varepsilon \right) \right\} \cdots \text{ EQUATION (1)}$$

ACCURACY LOSS : $P(\hat{y}_i > \hat{y}_j | y_i > y_j)$
FAIRNESS CONSTRAINT : $\lambda_{ij}(|A_{G_i > G_j} - A_{G_i > G_j}| - \varepsilon)$

The tolerance $\varepsilon$ is a threshold value at which unfairness is allowed, and $\lambda$ ij is a parameter for controlling the influence of the constraint.

In machine learning, a loss function represented by Equation (1) above An optimization problem that minimizes Loss is solved.

CITATION LIST

PATENT DOCUMENT

[Patent Document 1] International Publication Pamphlet No. WO2020 / 240981
[Patent Document 2] U.S. Patent Application Publication No. 2020 / 0293839

SUMMARY

[TECHNICAL PROBLEM]

However, in such conventional ranking output unfairness correction techniques, the fairness constraint in equation (1) above is not differentiable and needs to be approximated. This may overestimate (underestimate) the fairness. Also, when optimizing the approximated fairness constraint, it is necessary to adjust by adding a slack (small amount) because the derivative becomes 0 in many regions. This is because when less training data is available, there is a possibility that overfitting will occur and the test will fail to trade off. That is, in the optimization with the fairness constraint of the ranking accuracy loss according to the conventional method, there is a case where overfitting occurs.

In one aspect, it is an object of the present invention to enable fairness constrained optimization to be achieved without causing overfitting.

[SOLUTION TO PROBLEM]

Calculating a parameter based on a difference between a value of fairness based on an attribute of a second rank and a value of fairness based on an attribute of the first rank when first data having a first attribute and second data having a second attribute among the plurality of data are interchanged in the first rank ; and training the machine learning model using a loss function including the parameter.

According to an aspect of the embodiments, an information processing program that causes a computer to execute a process, the process includes identifying a first order in a plurality of pieces of data according to an output of a machine learning model for each of the plurality of pieces of data ; calculating a parameter based on a difference between a value of fairness based on an attribute of a second rank and a value of fairness based on an attribute of the first rank when first data having a first attribute and second data having a second attribute among the plurality of pieces of data are interchanged in the first rank ; performing training of the machine learning model using a loss function including the parameters.

[ADVANTAGEOUS EFFECTS OF INVENTION]

According to one embodiment, fairness constrained optimization can be achieved without causing overfitting.

BRIEF DESCRIPTION OF DRAWINGS

FIG. 1 is a diagram schematically illustrating a functional configuration of an information processing apparatus as an example of an embodiment;
FIG. 2 is a diagram showing an example in which ranking is set for a plurality of examples according to prediction scores ;
FIG. 3 is a diagram for explaining swap variables in the information processing apparatus as an example of the embodiment;
FIG. 4 is a flowchart for explaining processing in the information processing apparatus as an example of the embodiment;
FIG. 5 is a diagram showing a fairness evaluation value by the information processing apparatus as an example of the embodiment in comparison with a conventional method ;
FIG. 6 is a diagram illustrating a fairness correction method by the information processing apparatus as an example of the embodiment in comparison with a method not considering pairs; and
FIG. 7 is a diagram illustrating a hardware configuration of an information processing apparatus as an example of the embodiment.

DESCRIPTION OF EMBODIMENTS

Hereinafter, embodiments according to the present machine learning program, machine learning method, and machine learning device will be described with reference to the drawings. However, the embodiments described below are merely examples, and there is no intention to exclude various modifications and applications of techniques that are not explicitly described in the embodiments. That is, the present embodiment can be modified in various ways without departing from the scope of the present embodiment. In addition, each drawing is not intended to include only components illustrated in the drawing, may include other functions and the like.

(A) Configuration

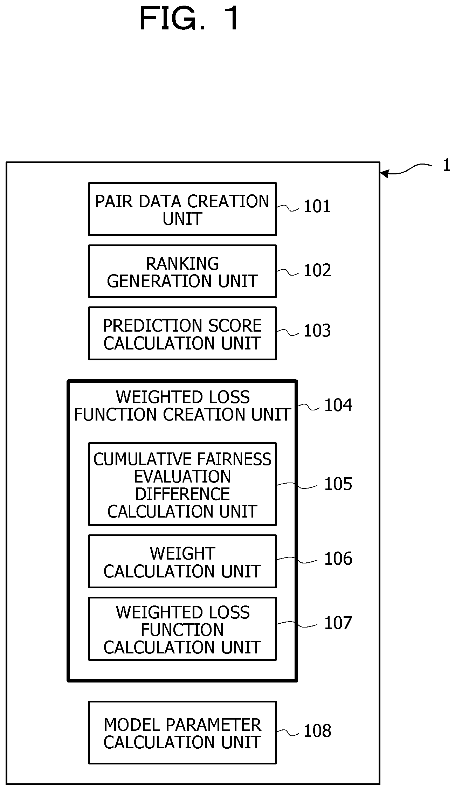

FIG. 1 is a diagram schematically illustrating a functional configuration of an information processing apparatus 1 as an example of an embodiment.

The information processing apparatus 1 ranks a plurality of (N) pieces of input data to be input. The information processing apparatus may be referred to as a computer or a calculation apparatus.

In the information processing apparatus 1, it is assumed that there is true data that cannot be observed and is not biased, but input data that can be observed is biased therefrom, so that an unfair ranking is generated. True data cannot be used, and ranking estimation is performed only from observation data in the information processing apparatus 1. In addition, group fairness is considered rather than individual fairness.

There are a plurality of ranking accuracy and fairness evaluation criteria, and in particular, it is necessary to consider a plurality of fairness evaluation criteria socially.

In the information processing apparatus 1, the following relationship is assumed between a true label which is not observed and a label which is observed. That is, it is assumed that the label y ' belonging to the true dataset $D_{true}$ and the label y belonging to the observation dataset $D_{biased}$ have the following binomial relationship.

$$P(y) \propto P(y') \times w$$

where w $\varepsilon$ [0,1] is the bias for the true label y '. The bias is different for each group.

In machine learning, training is performed using observation data as training data. In addition, it is assumed that unfairness occurs in the specific group by inputting the label y affected by the bias to the machine learning model. The machine learning model may be simply referred to as a model.

As illustrated in FIG. 1, the information processing apparatus 1 includes a pair data creation unit 101, a ranking generation unit 102, a prediction score calculation unit 103, a weighted loss function creation unit 104, and a model parameter calculation unit 108.

The pair data creation unit 101 creates pair data by using the input binary input data. The input data is binary data including a positive example and a negative example related to the label. The number of pieces of input data is set to N, and may be expressed as N examples. The pair data creation unit 101 creates pair data in which positive examples and negative examples are combined. Specifically, the pair data creation unit 101 creates a number of pair data equal to (the number of positive examples) × (the number of negative examples).

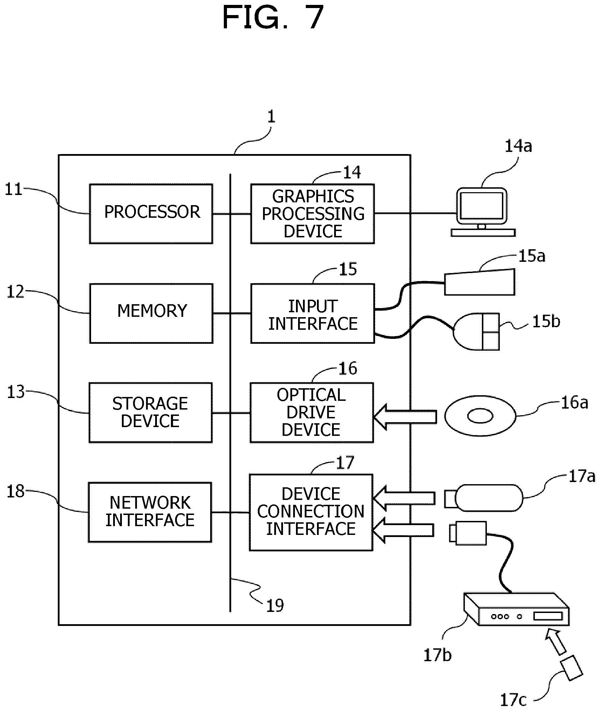

The pair data created by the pair data creation unit 101 is stored in a predetermined storage area in the memory 12 or the storage device 13 described later with reference to FIG. 7, for example.

The prediction score calculation unit 103 inputs the input data to the machine learning model and calculates a prediction score for the label {0,1}. The prediction score for example i may be represented by the following symbols : The higher the value of the prediction score (probability) determined to be a positive example. A machine learning model used in known rank learning may be used to calculate the prediction score.

[Equation 2]

$$\hat{y}_i \in [0,1]$$

The prediction score calculation unit 103 may use all the pair data items generated by the pair data creation unit 101. In addition, when the number of pair data items created by the pair data creation unit 101 is large and the number of pair data items is equal to or greater than a predetermined threshold value, a predetermined number of pair data items may be extracted.

The ranking generation unit 102 generate a descending order list related to the prediction scores of the examples by sorting the prediction scores of the respective examples calculated by the prediction score calculation unit 103. The descending list of prediction scores may be referred to as a prediction ranking.

The weighted loss function creation unit 104 creates a weighted loss function including weights used without performing approximation processing on the fairness constraint.

As illustrated in FIG. 1, the weighted loss function creation unit 104 includes a cumulative fairness evaluation difference calculation unit 105, a weight calculation unit 106, and a weighted loss function calculation unit 107.

The cumulative fairness evaluation difference calculation unit 105 calculates the fairness evaluation difference (diff) for each protection group pair with respect to the predicted ranking set by the ranking generation unit 102. Further, the fairness evaluation difference (diff) indicates current fairness. The cumulative fairness evaluation difference calculation unit 105 calculates a cumulative fairness evaluation difference by accumulating the fairness evaluation differences (diff) calculated for each training step. For each step of training, a process of inputting training data to the machine learning model and updating a parameter of the machine learning model based on a loss function according to the obtained prediction ranking is executed.

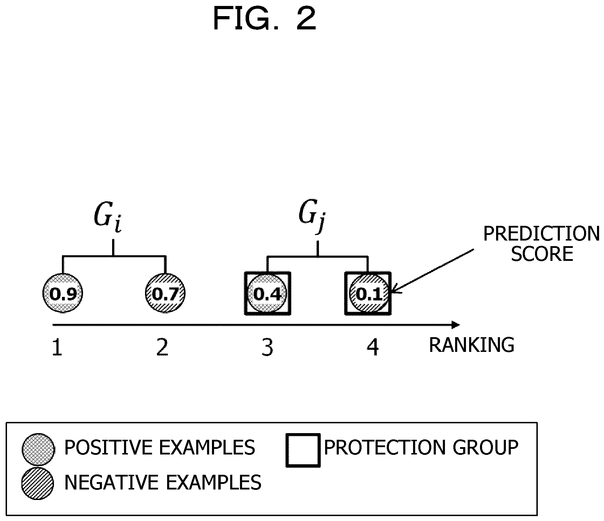

FIG. 2 is a diagram illustrating an example in which ranking is set for a plurality of examples (four examples in the example illustrated in FIG. 2) in accordance with prediction scores. In FIG. 2, a shaded circle represents a positive example or a negative example, and a number in a circle represents a prediction score.

In addition, in the drawing, a circle surrounded by a square indicates, for example, belonging to a socially minority group. A socially minority group may be referred to as a protection group. On the other hand, a circle that is not surrounded by a square indicates, for example, that a person belongs to a socially major group. A socially major group may be referred to as an unprotected group.

In the four examples illustrated in FIG. 2, ranking is set according to prediction score. In addition, a positive example with a prediction score of 0.9 and a negative example with a prediction score of 0.7 belong to the same group Gi. In addition, a positive example having a prediction score of 0.4 and a negative example having a prediction score of 0.1 belong to the same group Gj.

Hereinafter, a combination of groups may be referred to as a group pair. In the example illustrated in FIG. 2, for the group Gi, Gj, there may be, for example, four group pairs (Gi, Gi), (Gi, Gj), (Gj, Gi), (Gj, Gj).

The cumulative fairness evaluation difference calculation unit 105 calculates the difference in the fairness evaluation function for each group pair diff. The difference in the fairness evaluation function may be referred to as a difference in fairness. The difference between the fairness evaluation functions represents the current fairness.

The cumulative fairness evaluation difference calculation unit 105 may calculate the difference diff of the fairness evaluation function by using an evaluation reference value E which is a listwise (Listwise) evaluation reference, for example.

The cumulative fairness evaluation difference calculation unit 105 calculates the evaluation reference value $E_{GI}$ of the group $G_I$ using, for example, the following equations (2) to (4).

[Equation 3]

$$v_i := \frac{1}{\log(rank_i + 1)} \quad \cdots \text{ EQUATION (2)}$$

$$E = \frac{\sum_i y_i v_i}{\max E} \quad \cdots \text{ EQUATION (3)}$$

$$E_{G_i} := \frac{\sum_{i \in G_i} v_i}{\sum_{i'} v_{i'}} \quad \cdots \text{ EQUATION (4)}$$

$rank_i \in \mathbb{N}$ : PLACE IN RANKING OF EXAMPLE i

max $E$ : a NORMALIZATION CONSTANT (THEORETICAL UPPER LIMIT OF E)

The cumulative fairness evaluation difference calculation unit 105 calculates the evaluation reference value $E_{Gj}$ of the group $G_j$ in the same manner.

Then, the cumulative fairness evaluation difference calculation unit 105 calculates the difference of the fairness evaluation functions by using the following equation (5) diff. The difference diff of the fairness evaluation function represents a difference between the fairness evaluation values of the groups.

[Equation 4]

$$\text{diff}_{ij} = E_{G_i} - E_{G_j} \quad \cdots \text{ EQUATION (5)}$$

Difference in Fairness Evaluation Function diff corresponds to a value of fairness based on the attribute of the first rank.

Difference in Fairness Evaluation Function diff is the difference between the evaluation reference value $E_{Gi}$ of the group $G_I$ (the first evaluation value indicating the fairness of the first attribute based on the first rank) and the evaluation reference value $E_{Gj}$ of the group $G_j$ (the second evaluation value indicating the fairness of the second attribute based on the first rank).

In addition, the cumulative fairness evaluation difference calculation unit 105 may calculate the difference diff between the fairness evaluation functions using an area under the curve (AUC) that is a pairwise evaluation reference value.

The AUC is represented by the following formula :

[Equation 5]

$$AUC := P\left(\hat{y}_i > \hat{y}_j \mid y_i > y_j\right)$$

$$A_{G_i > G_j} := P\left(\hat{y}_i > \hat{y}_j \mid y_i > y_j, i \in G_i, j \in G_j\right)$$

$y_i \in \{0,1\}$ : OBSERVATION LABEL (0:NEGATIVE EXAMPLES, 1:POSITIVE EXAMPLES) IN EXAMPLE i
$\hat{y}_i \in [0,1]$ : PREDICTION SCORES (DETERMINED TO BE A POSITIVE EXAMPLE HIGHER THE PROBABILITY) IN EXAMPLE i
$G_i$ : PROTECTION GROUP TO WHICH EXAMPLE i BELONGS

Then, the cumulative fairness evaluation difference calculation unit 105 calculates a difference diff between the fairness evaluation functions using, for example, the following equation (6). The difference diff of the fairness evaluation function represents a difference between the fairness evaluation values of the groups.
[Equation 6]

$$\text{diff}_{ij} = A_{G_i > G_j} - A_{G_j > G_i} \quad \cdots \quad \text{EQUATION (6)}$$

Then, the cumulative fairness evaluation difference calculation unit 105 calculates cumulative fairness evaluation differences $c_{ij}$ and $c_{ji}$ based on the following equations (7) and (8) by using the calculated difference of the fairness evaluation function diff. The cumulative fairness evaluation differences $c_{ij}$ and $c_{ji}$ are values obtained by accumulating $\text{diff}_{ij}$ and $\text{diff}_{ji}$ by simple iteration. The cumulative fairness evaluation difference may be referred to as a cumulative fairness value.
The cumulative fairness evaluation difference calculation unit 105 estimates a cumulative fairness evaluation difference $c_{ij}$ using an update equation described in the following equation (7) that uses the learning rate $\eta$.
[Equation 7]

$$c_{ij}^{t+1} \leftarrow c_{ij}^{t} - \eta \cdot \text{diff}_{ij} \quad \cdots \quad \text{EQUATION (7)}$$

$c_{ij}^{t}$ : DIFFERENCE IN FAIRNESS EVALUATION FUNCTION ACCUMULATED UP TO TRAINING STEP t (CUMULATIVE FAIRNESS EVALUATION DIFFERENCE)

$\text{diff}_{ij}$ : DIFFERENCES IN FAIRNESS EVALUATION FUNCTION AT PRESENT

$\eta > 0$ : PARAMETER FOR CONTROLLING STEP WIDTH

The value of the cumulative fairness evaluation difference calculated by the cumulative fairness evaluation difference calculation unit 105 is stored in, for example, a predetermined storage area in the memory 12 or the storage device 13.
The weight calculation unit 106 sets a weight for each group pair. The weight of the pair (I, j) is denoted as weight wij.
The weight calculation unit 106 calculates a swap (swap)variable. The swap variable indicates group fairness that is varied by swapping (optimizing) pairs. Even in the same group pair, swap changes depending on the position of ranking.

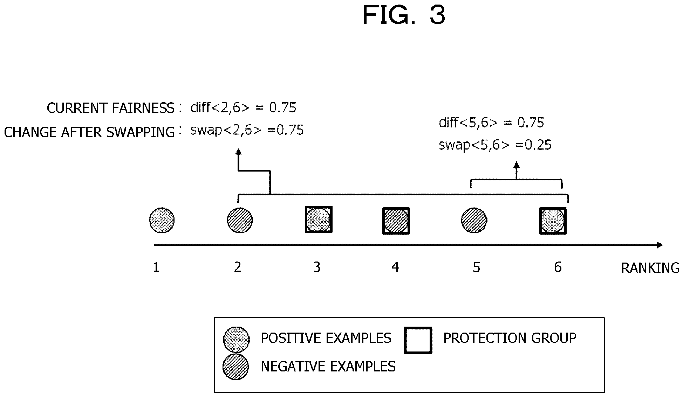

FIG. 3 is a diagram for explaining swap variables in the information processing apparatus 1 as an example of the embodiment.
In the example illustrated in FIG. 3, each shaded circle represents a positive example or a negative example, and indicates ranking of each example. Also, in the figure, a circle surrounded by a square indicates that it belongs to a protection group. In addition, a circle not surrounded by a square indicates that it belongs to a unprotected group.
In the example illustrated in FIG. 3, the difference (diff) in the group fairness (may be referred to as "pairwise fairness") between the positive example and the negative example is 0.75 (diff = 0.75). In order to achieve fairness, we want this diff to be 0.
Consider performing corrective processing by exchanging (optimizing the order of) a positive example of a protected group and a negative example of a non-protected group. In the example illustrated in FIG. 3, two pairs <2, 6> and <5, 6> are considered as candidates for exchange, respectively.

When <2, 6> are exchanged, diff <2, 6> after conversion becomes 0, and the fairness becomes ideal.

When <5, 6> are exchanged, diff <5, 6> after conversion becomes 0.5, and fairness is still not achieved.

The difference "diff" in the group fairness between before and after swapping group pair rankings may be referred to as the swap variable.

The swap variable swap <2,6> in the example of <2,6> e.g., above is 0.75 (= 0.75 - 0). The swap variable swap <5, 6> in the above example of <5, 6> is 0.25 (= 0.75 - 0.5).

The swap variable is a parameter based on the difference between the value of fairness based on the attribute of the second rank after the ranks of the first data of the protected group (first attribute) and the second data of the unprotected group (second attribute) among the plurality of data are swapped and the value of fairness based on the attribute of the first rank (predicted ranking) diff.

The swap variable represents the importance of the pair according to the rate of change of fairness after swapping. Then, the weight calculation unit 106 calculates a swap variable for each pair.

The weight calculation unit 106 calculates the weight $w_{ij}$ based on $c_{ij}$. The weight $w_{ij}$ is expressed by the following equation (8). That is, the weight $w_{ij}$ is proportional to a probability distribution having $swap_{ij} \times c_{ij}$ as an argument.

$$w_{ij} \propto P(swap_{ij} \times c_{ij}) \quad (8)$$

The weight calculation unit 106 may calculate the weight $w$ using, for example, a sigmoid function $\sigma_{ij}$. That is, the weight calculation unit 106 may calculate the weight $w_{ij}$ according to the following equation (9).

$$w_{ij} = \sigma(swap_{ij} \times c_{ij}) \quad (9)$$

Note that $\sigma(x)$ is a function for converting the argument x into a range of [0,1], and is a function for randomizing a variable. $\Sigma(x)$ is expressed by, for example, the following equation.

$$\sigma(x) = 1 / (1 + e^{-x})$$

The weight calculation unit 106 calculates a weight in which swap and the difference between the fairness evaluation functions are reflected.

The weighted loss function calculation unit 107 calculates a weighted loss function Loss represented by the following equation (10) using the weight $w_{ij}$ calculated by the weight calculation unit 106.
[Equation 8]

$$Loss = -\sum_{(y_i, y_j) \in D_{biased}} w_{ij} P(\hat{y}_i > \hat{y}_j | y_i > y_j)$$

$$\cdots \text{ EQUATION (10)}$$

In the loss function described in Equation (10) above, the weight is multiplied by the accuracy loss.

That is, the weighted loss function calculation unit 107 calculates an error (accuracy loss) of the prediction ranking and accumulates a value obtained by multiplying the error by a weight to calculate a weighted loss function Loss.

Weighted Loss Function Loss (loss function) includes a cumulative fairness value obtained by cumulatively processing a value of fairness based on an attribute calculated based on a rank of data according to an output of a machine learning model for each step of training.

The model parameter calculation unit 108 updates each parameter of the machine learning model used by the prediction score calculation unit 103 by using the weighted loss function Loss generated (calculated) by the weighted loss function creation unit 104 (the weighted loss function calculation unit 107. The model parameter calculation unit 108 calculates each parameter of the machine learning model by the gradient descent method using the weighted loss function Loss. The calculated parameters are reflected in the machine learning model used by the prediction score calculation unit 103.

In the loss function described in equation (10 above, $c_{ij}$ is increased if $diff_{ij} < 0$, i.e., if group $G_l$ is more

disadvantaged than group $G_j$.

This increases the weight $w_{ij}$ and increases the loss for items in $G_I$. As a result, in the machine learning, learning is performed so that the item of the group $G_I$ becomes higher.

If on the other hand diff $_{ij}$ > 0, i.e. group $G_I$ is treated more favorably than group $G_j$, $c_{ij}$ is decreased.

This reduces the weight $w_{ij}$ and reduces the loss for items in $G_I$. As a result, in the machine learning, learning is performed so that the item of the group $G_I$ becomes lower.

In this way, the model parameter calculation unit 108 updates the parameters of the machine learning model using the weighted loss function Loss, and thus the machine learning model learns to place an item with a larger loss at a higher position.

(B) Operation

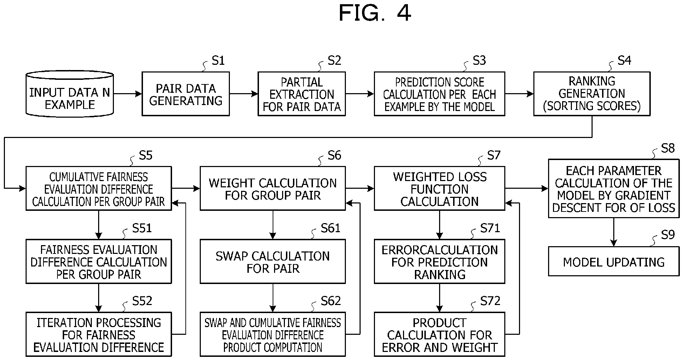

Processing in the information processing apparatus 1 as an example of the embodiment configured as described above will be described with reference to a flowchart illustrated in FIG. 4.

Initialization by the weighted loss function creation unit 104 is executed in advance, for example, a training step $t = 0$, $\eta = 10$, and $c_{ij} = 0$ are set.

In the S1, the pair data generating unit 101 generates a plurality of pairs of positive examples and negative examples by using the input binary values. The pair data creation unit 101 creates pair data of all combinations of positive examples and negative examples.

In the S2, when the number of pair data created by the pair data creation unit 101 is large and the number of pair data is equal to or larger than a predetermined value, the prediction score calculation unit 103 extracts a predetermined number of pair data. When the number of pairs is less than the predetermined number, the process may be skipped and the process may proceed to S3.

In S3, the prediction score calculation unit 103 inputs each example of the input dataset to the machine learning model and calculates a prediction score for the label {0,1}.

In the S4, the ranking generator 102 sorts the prediction scores of the examples calculated by the prediction score calculation unit 103 to create a descending list of the prediction scores of the examples.

In the S5, the cumulative fairness evaluation difference calculation unit 105 calculates a cumulative fairness evaluation difference based on the predicted ranking set by the ranking generation unit 102.

The cumulative fairness evaluation difference calculation unit 105 calculates the fairness evaluation difference (diff) for each group pair when calculating the cumulative fairness evaluation difference (S51). Then, the cumulative fairness evaluation difference calculation unit 105 calculates a cumulative fairness evaluation difference by accumulating the calculated fairness evaluation difference (diff) by iteration (S52).

For example, in the predictive ranking illustrated in FIG. 2, when the evaluation reference value $E_{Gi}$ of the group $G_I$ is 0.58 ($E_{Gi} \approx 0.58$ and the evaluation reference value $E_{Cj}$ of the group $G_j$ is 0.33 ($E_{Gj} \approx 0.33$), the difference diff $_{ij}$ between the fairness evaluation functions of the group pair $(G_I, G_j)$ is obtained as follows.

[Equation 9]

$$\text{diff}_{ij} = E_{G_i} - E_{G_j} \approx 0.25$$

The cumulative fairness evaluation difference calculation unit 105 calculates the cumulative fairness evaluation differences $c_{ij}$ and $c_{ji}$ based on the difference of the fairness evaluation function diff $_{ij}$ and the above equation (7).

[Expression 10]

$$c_{ij} = c_{ij} - \eta \cdot \text{diff}_{ij} = 0 - 10 \cdot 0.25 = -2.5$$

$$c_{ji} = c_{ji} - \eta \cdot \text{diff}_{ji} = 0 + 10 \cdot 0.25 = 2.5$$

In the S6, the weight calculation unit 106 sets a weight for each group pair.

When calculating the weight, the weight calculation unit 106 calculates swap (swap) for each pair (S61), and calculates the weight $w_{ij}$ based on the product of the calculated swap (swap) and the cumulative fairness evaluation difference $c_{ij}$ (S62). It is desirable that the weight calculation unit 106 consider only a pair of a positive example and a negative example.

For example, an example of calculating a weight in the predictive ranking illustrated in FIG. 2 will be described. In the examples described below, subscripts of numbers 1 to 4 represent rankings. Swap $_{12}$ = 0, swap $_{14}$ ≈ 0.3, swap $_{32}$ ≈ 0.1, and swap $_{34}$ = 0.

Because w $_{ij}$ = P (swap $_{ij}$ × c $_{ij}$), the weight w $_{ij}$ may be calculated, but in this example, an example using a sigmoid function σ is described.

For example, the weight calculation unit 106 calculates the weight w $_{ij}$ by the following equation using the sigmoid function σ.

$$wi_j = σ \,(swap_{ij} × c_{ij})$$

In the predictive ranking illustrated in FIG. 2, the calculated weights are described below.

$$w_{12} = σ \,(0 × 0) = 0.5$$

$$w_{14} = σ \,\{0.3 × (\text{-}2.5)\} ≈ 0.32$$

$$w_{32} = σ \,(0.1 × 2.5) ≈ 0.56$$

$$w_{34} = σ \,(0 × 0) = 0.5$$

In the S7, the weighted loss function calculation unit 107 calculates the weighted loss function. When calculating the weighted loss function, the weighted loss function calculation unit 107 calculates errors (accuracy loss) of each predicted ranking (S71) and multiplies the errors by corresponding weights (S72). Then, the weighted loss function calculation unit 107 calculates a weighted loss function Loss by accumulating the product of the error and the weight.

The error of the predicted ranking is represented by, for example, the following equation.

[Expression 11]

$$\text{ERROR} \quad -P\left(\hat{y}_i > \hat{y}_j | y_i > y_j\right) = -\ln \sigma \left(\hat{y}_i > \hat{y}_j | y_i > y_j\right) = P_{ij}$$

Various known methods may be used to calculate the error. In this example, the logarithm lnx = logex is calculated after first making a probability with σ (x). The use of logarithms is for general reasons to simplify the calculation of gradients.

The weighted loss function calculation unit 107 calculates a weighted loss function using the above equation (10).

$$\text{Loss} = 0.5 × 0.59 + 0.32 × 0.37 + 0.56 × 0.85 \; 0.5 × 0.55$$

≈ 1.1

Thereafter, in the S8, the model parameter calculation unit 108 calculates each parameter of the machine learning model used by the prediction score calculation unit 103 by using the weighted loss function Loss generated (calculated) by the weighted loss function creation unit 104 (the weighted loss function calculation unit 107.

In the S9, the model parameter calculation unit 108 uses the calculated parameters to update the machine learning model used by the prediction score calculation unit 103. Thereafter, the process is terminated.

(C) Effect

As described above, according to the information processing apparatus 1 as an embodiment of the present invention, the weight calculation unit 106 calculates the swap variable in the case where the order of the positive example of the protection group and the negative example of the unprotected group is switched, and the weighted loss function calculation unit 107 calculates the loss function reflecting the swap variable as the weight. At this time, the weight estimation is performed by directly using the fairness constraint without approximation.

Then, each parameter of the machine learning model is updated using the loss function calculated in this way. This makes it possible to accurately detect group fairness regardless of the number of pieces of data.

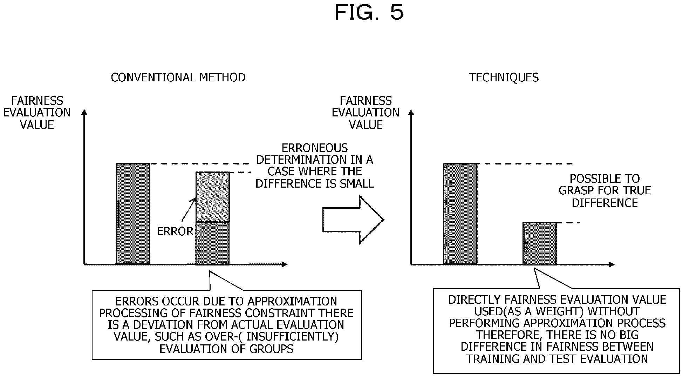

FIG. 5 is a diagram illustrating a fairness evaluation value by the information processing apparatus 1 as an example of the embodiment in comparison with a conventional method.

In the conventional method, since the approximation process is performed on the fairness constraint in the loss function (see equation (1)), an error occurs due to the approximation process. As a result, separation from the actual evaluation value occurs, for example, a certain group is excessively (insufficiently) evaluated.

On the other hand, in the information processing apparatus 1, the fairness evaluation value is directly used as the weight without performing the approximation process in the loss function. Therefore, there is no large difference in fairness between the training of the machine learning model and the test evaluation.

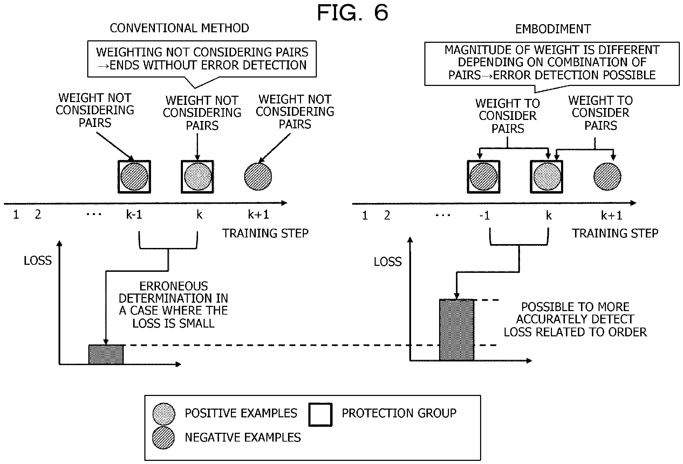

FIG. 6 is a diagram illustrating a fairness correction method by the information processing apparatus 1 as an example of the embodiment in comparison with a method that does not consider a pair.

In the loss function in the conventional method described in the above-described equation (1), it is conceivable to perform the fairness correction processing by weighting the loss with a weight according to the Boltzmann distribution with the fairness constraint as an argument without performing the approximation processing. The probability distribution according to the exponential family of fairness constraints is used as the weights.

However, in such a method, since the pair is not considered, an erroneous determination occurs in a case where the loss is small in the course of the training step, and the training of the machine learning model ends without error detection.

On the other hand, in the information processing apparatus 1, the weight calculation unit 106 sets a weight for each group pair. Since the magnitude of the weight is different depending on the combination of the pairs, it is possible to more accurately detect the loss related to the order in the course of the training step the error detection can be performed.

The weight calculation unit 106 sets a weight in consideration of the swap variable for each pair (order) and varies the weight according to the combination of the pair, thereby optimizing the pair.

Further, in the information processing apparatus 1, by performing weighting in consideration of the pair (order), it is possible to correct the fairness of ranking by weighting. Pair (order) unfairness can be detected and rectified.

(D) Others

FIG. 7 is a diagram illustrating a hardware configuration of the information processing apparatus 1 as an example of the embodiment.

The information processing apparatus 1 is a computer, and includes, for example, a processor 11, a memory 12, a storage device 13, a graphic processing device 14, an input interface 15, an optical drive device 16, a device connection interface 17, and a network interface 18 as components. These components 11 to 18 are configured to be able to communicate with each other via a bus 19.

The processor (controller) 11 controls the entire information processing apparatus 1. The processor 11 may be a multiprocessor. The processor 11 may be, for example, any one of a CPU, a micro processing unit (MPU), a digital signal processor (DSP), an application specific integrated circuit (ASIC), a programmable logic device (PLD), and a field programmable gate array (FPGA). In addition, the processor 11 may be a combination of two or more types of elements among a CPU, an MPU, a DSP, an ASIC, a PLD, and an FPGA.

When the processor 11 executes a control program (machine learning program, not illustrated), the functions as the pair data creation unit 101, the ranking generation unit 102, the prediction score calculation unit 103, the weighted loss function creation unit 104, and the model parameter calculation unit 108 illustrated in FIG. 1 are realized.

The information processing apparatus 1 realizes functions as the pair data creation unit 101, the ranking generation unit 102, the prediction score calculation unit 103, the weighted loss function creation unit 104, and the model parameter calculation unit 108 by executing, for example, a program (machine learning program, OS program) recorded in a computer-readable non-transitory recording medium.

The program describing the processing contents to be executed by the information processing apparatus 1 can be recorded in various recording media. For example, a program to be executed by the information processing apparatus 1 may be stored in the storage device 13. The processor 11 loads at least a part of the program in the storage device 13 into the memory 12 and executes the loaded program.

The program to be executed by the information processing system 1 (processor 11) may be recorded in non-transitory portable recording media such as an optical disc 16a, a memory device 17a, and a memory card 17c. The program stored in the portable recording medium becomes executable after being installed in the storage device 13 under the control of the processor 11, for example. Alternatively, the processor 11 may read the program directly from the portable recording medium and execute the program.

The memory 12 is a storage memory including a ROM (Read Only Memory) and a RAM (Random Access Memory. The RAM of the memory 12 is used as a main storage device of the information processing apparatus 1. At least a part of the program to be executed by the processor 11 is temporarily stored in the RAM. The memory 12 also stores various types of data required for processing by the processor 11.

The storage device 13 is a storage device such as a hard disk drive (HDD), a solid state drive (SSD), or a storage class memory (SCM), and stores various data.

The storage device 13 stores an OS program, a control program, and various data. The control program includes a machine learning program.

Note that a semiconductor storage device such as an SCM or a flash memory may be used as the auxiliary storage device. RAID (Redundant Arrays of Inexpensive Disks) may be configured by using a plurality of storage devices 13.

The storage device 13 or the memory 12 may store calculation results generated by the pair data creation unit 101, the ranking generation unit 102, the prediction score calculation unit 103, the weighted loss function creation unit 104, and the model parameter calculation unit 108, various data to be used, and the like.

A monitor 14a is connected to the graphics processor 14. The graphic processing device 14 displays an image on the screen of the monitor 14a in accordance with an instruction from the processor 11. Examples of the monitor 14a include a display apparatus using a cathode ray tube (CRT), a liquid crystal display apparatus, and the like.

A keyboard 15a and a mouse 15b are connected to the input interface 15. The input interface 15 transmits signals sent from the keyboard 15a and the mouse 15b to the processor 11. Note that the mouse 15b is an example of a pointing device, and other pointing devices may be used. Examples of other pointing devices include a touch panel, a tablet, a touch pad, and a track ball.

The optical drive device 16 reads information recorded on the optical disc 16a using a laser beam or the like. The optical disc 16a is a portable non-transitory recording media on which information is recorded so as to be readable by reflection of light. Examples of the optical disc 16a include DVDs (Digital Versatile Discs), DVD-RAM, CD-ROM (Compact Disc Read Only Memory), CD-R (Recordable) / RW (ReWritable), and the like.

The device connection interface 17 is a communication interface for connecting a peripheral device to the information processing apparatus 1. For example, a memory device 17a and a memory reader / writer 17b can be connected to the device connection interface 17. The memory device 17a is a non-transitory recording media having a function of communicating with the device connection interface 17. The memory reader / writer 17b performs writing to the memory card 17c or reading from the memory card 17c. The memory card 17c is a card-type non-transitory recording media.

The network interface 18 is connected to a network. The network interface 18 transmits and receives data via a network. Other information processing apparatuses, communication devices, and the like may be connected to the network.

The disclosed technology is not limited to the above-described embodiments, and various modifications can be made without departing from the spirit of the embodiments. Each configuration and each process of the present embodiment can be selected as necessary, or may be appropriately combined.

In addition, it is possible for those skilled in the art to implement and manufacture the present embodiment based on the above disclosure.

REFERENCE SIGNS LIST

    1 Information processing system
    10 computer
    11 processor (control unit)
    12 RAM
    13 HDD
    14 graphics processing device
    14a monitor
    15 input interface
    15a keyboard
    15b mice
    16 optical drive device
    16a optical disc
    17 device connection interface
    17a memory device
    17b memory reader / writer

17c memory card
18 Network interface
18a network
19 bus
101 pair data creation unit
102 ranking generation unit
103 prediction score calculation unit
104 weighted loss function creation unit
105 cumulative fairness evaluation difference calculation unit
106 weight calculation unit
107 weighted loss function calculation unit
108 model parameter calculation unit

**Claims**

1. An information processing program that causes a computer to execute processing, the processing comprising:

   identifying a first order in a plurality of pieces of data according to an output of a machine learning model for each of the plurality of pieces of data ;
   calculating a parameter based on a difference between a value of fairness based on an attribute of a second rank and a value of fairness based on an attribute of the first rank when first data having a first attribute and second data having a second attribute among the plurality of pieces of data are interchanged in the first rank ;
   performing training of the machine learning model using a loss function including the parameters.

2. The information processing program according to claim 1, wherein
   the value of the fairness based on the attribute of the first rank is a difference between a first evaluation value indicating the fairness of the first attribute based on the first rank and a second evaluation value indicating the fairness of the second attribute based on the first rank.

3. The information processing program according to claim 2, wherein
   the loss function includes a cumulative fairness value obtained by cumulatively processing a value of fairness based on an attribute calculated based on a rank of data according to an output of the machine learning model for each step of the training.

4. The information processing program according to any one of claims 1 to 3, wherein
   the loss function is a weighted loss function obtained by multiplying a precision loss by a weight including the parameter and the cumulative fairness value.

5. The information processing method implemented by a computer, the information processing method comprising:

   identifying a first order in a plurality of pieces of data according to an output of a machine learning model for each of the plurality of pieces of data ;
   calculating a parameter based on a difference between a value of fairness based on an attribute of a second rank and a value of fairness based on an attribute of the first rank when first data having a first attribute and second data having a second attribute among the plurality of pieces of data are interchanged in the first rank ;
   performing training of the machine learning model using a loss function including the parameters.

6. The information processing method according to claim 5, wherein
   the value of the fairness based on the attribute of the first rank is a difference between a first evaluation value indicating the fairness of the first attribute based on the first rank and a second evaluation value indicating the fairness of the second attribute based on the first rank.

7. The information processing method according to claim 5 or 6, wherein
   the loss function includes a cumulative fairness value obtained by cumulatively processing a value of fairness based on an attribute calculated based on a rank of data according to an output of the machine learning model for each step of the training.

8. The information processing method according to any one of claims 5 to 7, wherein
the loss function is a weighted loss function obtained by multiplying a precision loss by a weight including the parameter and the cumulative fairness value.

9. A machine learning device comprising:
a control unit configured to:

identify a first order in a plurality of pieces of data according to an output of a machine learning model for each of the plurality of pieces of data,
calculate a parameter based on a difference between a value of fairness based on an attribute of a second rank and a value of fairness based on an attribute of the first rank when first data having a first attribute and second data having a second attribute among the plurality of pieces of data are interchanged in the first rank, and
perform training of the machine learning model using a loss function including the parameters.

10. The machine learning device according to claim 9, wherein
the value of the fairness based on the attribute of the first rank is a difference between a first evaluation value indicating the fairness of the first attribute based on the first rank and a second evaluation value indicating the fairness of the second attribute based on the first rank.

11. The machine learning device according to claim 9 or 10, wherein
the loss function includes a cumulative fairness value obtained by cumulatively processing a value of fairness based on an attribute calculated based on a rank of data according to an output of the machine learning model for each step of the training.

12. The machine learning device according to any one of claims 9 to 11, wherein
the loss function is a weighted loss function obtained by multiplying a precision loss by a weight including the parameter and the cumulative fairness value.

# FIG. 1

```
                                                        1
┌──────────────────────────────────────────────┐◄─
│   ┌──────────────────────────┐                 │
│   │   PAIR DATA CREATION      │ ∼ 101           │
│   │        UNIT               │                 │
│   └──────────────────────────┘                 │
│   ┌──────────────────────────┐                 │
│   │      RANKING              │ ∼ 102           │
│   │   GENERATION UNIT         │                 │
│   └──────────────────────────┘                 │
│   ┌──────────────────────────┐                 │
│   │  PREDICTION SCORE         │ ∼ 103           │
│   │  CALCULATION UNIT         │                 │
│   └──────────────────────────┘                 │
│  ┌────────────────────────────────┐            │
│  │      WEIGHTED LOSS              │ ∼ 104      │
│  │  FUNCTION CREATION UNIT         │            │
│  │  ┌──────────────────────────┐   │            │
│  │  │ CUMULATIVE FAIRNESS       │   │            │
│  │  │    EVALUATION             │ ∼ 105         │
│  │  │    DIFFERENCE             │   │            │
│  │  │ CALCULATION UNIT          │   │            │
│  │  └──────────────────────────┘   │            │
│  │  ┌──────────────────────────┐   │            │
│  │  │      WEIGHT               │ ∼ 106         │
│  │  │  CALCULATION UNIT         │   │            │
│  │  └──────────────────────────┘   │            │
│  │  ┌──────────────────────────┐   │            │
│  │  │   WEIGHTED LOSS           │ ∼ 107         │
│  │  │     FUNCTION              │   │            │
│  │  │  CALCULATION UNIT         │   │            │
│  │  └──────────────────────────┘   │            │
│  └────────────────────────────────┘            │
│   ┌──────────────────────────┐                 │
│   │  MODEL PARAMETER          │ ∼ 108           │
│   │  CALCULATION UNIT         │                 │
│   └──────────────────────────┘                 │
└──────────────────────────────────────────────┘
```

# FIG. 2

# FIG. 3

CURRENT FAIRNESS : diff<2,6> = 0.75
CHANGE AFTER SWAPPING : swap<2,6> =0.75

diff<5,6> = 0.75
swap<5,6> =0.25

1      2      3      4      5      6      RANKING

POSITIVE EXAMPLES    PROTECTION GROUP
NEGATIVE EXAMPLES

FIG. 4

```
                    ┌─S1          ┌─S2              ┌─S3                   ┌─S4
┌──────────┐   ┌─────────────┐ ┌─────────────┐ ┌───────────────────┐ ┌─────────────┐
│INPUT DATA N│→ │ PAIR DATA   │→│ PARTIAL     │→│ PREDICTION SCORE  │→│ RANKING     │
│ EXAMPLE    │  │ GENERATING  │ │ EXTRACTION  │ │ CALCULATION PER   │ │ GENERATION  │
└──────────┘   └─────────────┘ │ FOR PAIR DATA│ │ EACH EXAMPLE BY   │ │ (SORTING    │
                               └─────────────┘ │ THE MODEL         │ │ SCORES)     │
                                               └───────────────────┘ └─────────────┘
```

- S1 PAIR DATA GENERATING
- S2 PARTIAL EXTRACTION FOR PAIR DATA
- S3 PREDICTION SCORE CALCULATION PER EACH EXAMPLE BY THE MODEL
- S4 RANKING GENERATION (SORTING SCORES)
- S5 CUMULATIVE FAIRNESS EVALUATION DIFFERENCE CALCULATION PER GROUP PAIR
- S51 FAIRNESS EVALUATION DIFFERENCE CALCULATION PER GROUP PAIR
- S52 ITERATION PROCESSING FOR FAIRNESS EVALUATION DIFFERENCE
- S6 WEIGHT CALCULATION FOR GROUP PAIR
- S61 SWAP CALCULATION FOR PAIR
- S62 SWAP AND CUMULATIVE FAIRNESS EVALUATION DIFFERENCE PRODUCT COMPUTATION
- S7 WEIGHTED LOSS FUNCTION CALCULATION
- S71 ERRORCALCULATION FOR PREDICTION RANKING
- S72 PRODUCT CALCULATION FOR ERROR AND WEIGHT
- S8 EACH PARAMETER CALCULATION OF THE MODEL BY GRADIENT DESCENT FOR OF LOSS
- S9 MODEL UPDATING

FIG. 5

CONVENTIONAL METHOD

TECHNIQUES

FAIRNESS EVALUATION VALUE

FAIRNESS EVALUATION VALUE

ERRONEOUS DETERMINATION IN A CASE WHERE THE DIFFERENCE IS SMALL

ERROR

POSSIBLE TO GRASP FOR TRUE DIFFERENCE

ERRORS OCCUR DUE TO APPROXIMATION PROCESSING OF FAIRNESS CONSTRAINT THERE IS A DEVIATION FROM ACTUAL EVALUATION VALUE, SUCH AS OVER-( INSUFFICIENTLY) EVALUATION OF GROUPS

DIRECTLY FAIRNESS EVALUATION VALUE USED(AS A WEIGHT) WITHOUT PERFORMING APPROXIMATION PROCESS THEREFORE, THERE IS NO BIG DIFFERENCE IN FAIRNESS BETWEEN TRAINING AND TEST EVALUATION

# FIG. 6

**CONVENTIONAL METHOD**

WEIGHTING NOT CONSIDERING PAIRS
→ENDS WITHOUT ERROR DETECTION

WEIGHT NOT CONSIDERING PAIRS

WEIGHT NOT CONSIDERING PAIRS

WEIGHT NOT CONSIDERING PAIRS

1   2   ···   k-1   k   k+1   TRAINING STEP

LOSS

ERRONEOUS DETERMINATION IN A CASE WHERE THE LOSS IS SMALL

**EMBODIMENT**

MAGNITUDE OF WEIGHT IS DIFFERENT DEPENDING ON COMBINATION OF PAIRS→ERROR DETECTION POSSIBLE

WEIGHT TO CONSIDER PAIRS

WEIGHT TO CONSIDER PAIRS

1   2   ···   -1   k   k+1   TRAINING STEP

LOSS

POSSIBLE TO MORE ACCURATELY DETECT LOSS RELATED TO ORDER

POSITIVE EXAMPLES     PROTECTION GROUP

NEGATIVE EXAMPLES

# FIG. 7

## INTERNATIONAL SEARCH REPORT

| International application No. |
| --- |
| **PCT/JP2021/021059** |

### A. CLASSIFICATION OF SUBJECT MATTER

*G06N 20/00*(2019.01)i
FI: G06N20/00 130

According to International Patent Classification (IPC) or to both national classification and IPC

### B. FIELDS SEARCHED

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | ZEHLIKE, Meike et al., Reducing disparate exposure in ranking: A learning to rank approach [online], 20 April 2020, [retrieved on 23 June 2021], Retrieved from the Internet: <URL: https://dl.acm.org/doi/pdf/10.1145/3366424.3380048> 4 DELTR: DISPARATE EXPOSURE IN LEARNING TO RANK | 1-12 |
| A | WO 2021/085188 A1 (SONY CORP.) 06 May 2021 (2021-05-06) paragraphs [0057]-[0063] | 1-12 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 June 2021** | **06 July 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2021/021059** |

| Patent document cited in search report | Publication date (day/month/year) | Patent family member(s) | Publication date (day/month/year) |
| --- | --- | --- | --- |
| WO 2021/085188 A1 | 06 May 2021 | (Family: none) | |

Form PCT/ISA/210 (patent family annex) (January 2015)

**EP 4 350 585 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020240981 A
- US 20200293839